# EUROPEAN PATENT APPLICATION

(11) **EP 4 810 232 A1**
(43) Date of publication of application: **23.09.2026**
(21) Application number: 26160288.2
(22) Date of filing: 24.02.2026
(51) Int. Cl.: B29C 64/124, B29C 64/188, B29C 64/35, B08B 3/10, B08B 3/12, B33Y 10/00, B33Y 40/00

(54) **METHOD FOR CLEANING AN ADDITIVELY MANUFACTURED PART**

(30) Priority: 19.03.2025 US 202519084299
(71) Applicant: General Electric Company, Evendale, Ohio 45215 (US)
(72) Inventor: Lansing Grote, Robert, Evendale, 45215 (US); Yang, Xi, Evendale, 45215 (US); Barnhill, Christopher D., Evendale, 45215 (US)
(74) Representative: Hafner & Kohl PartmbB

(57) **Abstract**

A method (500) for cleaning one or more deposited layers (116) of an additively manufactured part is disclosed. The method (500) includes curing a first layer (116) of a first material on a build plate (110). The first material includes a first component, a second component, and a third component. The method (500) further includes placing the first layer (116) in a bath (200) of a cleaning solution (204) that includes the third component, agitating the bath (200) such that an excess of the first material is removed, and curing a second layer (116) of a second material. The second material includes the third component.

## Description

### TECHNICAL FIELD

This disclosure relates generally to additive manufacturing, and more particularly, to methods for cleaning parts during additive manufacturing processes.

### BACKGROUND

Additive manufacturing is a process in which material is built up piece-by-piece, line-by-line, or layer-by-layer to form a component. Stereolithography is a type of additive manufacturing process using a liquid including a radiant-energy curable photopolymer resin and a curing energy source such as a laser. Digital light processing (DLP) three-dimensional (3-D) printing includes a two-dimensional image projector, which can be analog (masked light source) or digital (DLP or steerable mirror devices with light source), to build a component one layer at a time. For each layer, the projector emits radiation through a transparent object defining a constrained surface of the liquid, the radiation directly interacting with the surface of the liquid or with the liquid to create a layer of the component. The layer of the component matches a radiation pattern corresponding to a desired cross section of the component. Exposure to the radiation cures and solidifies the pattern in the resin and joins it to a previously cured layer. One or more liquids, each liquid including a different photopolymer resin, can be used to create a component with multiple materials.

When using two or more liquids, each liquid including a different photopolymer resin, it is preferable to have a clean and uncontaminated build surface. Residual cured or partially cured resin can adhere to the build surface during the formation of each printed layer and may cause unwanted roughness on the surface of the printed component. Further, liquid uncured resin may also remain on the build surface during the formation of each printed layer between formations of printed layers of different photopolymer resins. Other contaminants, like secondary materials, may also adhere to the build surface and further disrupt the uniformity of the printed component's layered structure. The additional surface roughness created by residual cured products and/or other impurities can diminish the dimensional accuracy of each printed layer, disrupt the surface morphology, and adversely affect the density and other physical properties of the printed component. Between printed layers of different photopolymer resins, residual uncured liquid including a first photopolymer resin may mix with the uncured liquid including a second photopolymer resin, which can disrupt the uniformity of the printed layers, contaminate the uncured liquid including the second photopolymer resin, and create layers with mixed photopolymer resins.

### BRIEF DESCRIPTION OF THE DRAWINGS

The accompanying drawings illustrate various systems, apparatuses, devices, and methods, in which like reference characters refer to like parts throughout, and in which:
FIG. 1 is a side view of an illustrative embodiment of an apparatus for cleaning an additively manufactured part or a portion thereof in accordance with various disclosed aspects herein;
FIG. 2 is a side view of an illustrative embodiment of an apparatus for cleaning an additively manufactured part or a portion thereof in accordance with various disclosed aspects herein;
FIG. 3 is a side view of an illustrative embodiment of an apparatus for cleaning an additively manufactured part or a portion thereof in accordance with various disclosed aspects herein;
FIG. 4 is a side view of an apparatus for cleaning an additively manufactured part or a portion thereof in accordance with various disclosed aspects herein; and
FIG. 5 depicts a block diagram demonstrating illustrative steps of a method for cleaning an additively manufactured part or a portion thereof, according to various disclosed aspects herein.

The present disclosure may be embodied in several forms without departing from its spirit or essential characteristics. The scope of the present disclosure is defined in the appended claims, rather than in the specific description preceding them. All aspects and/or embodiments that fall within the meaning and range of equivalency of the claims are therefore intended to be embraced by the claims.

### DETAILED DESCRIPTION

Conventional additive manufacturing processes using one or more resins employ various mechanisms and methods for cleaning printed parts or a printed part layer to ensure the dimensional accuracy of the resulting additively manufactured product. Many additive manufacturing cleaning methods use a mechanical apparatus for removing uncured or partially cured materials from an additively manufactured part or for removing a first material from an additively manufactured part prior to curing another material on the part. For instance, an additively manufactured part or a portion thereof may be cleaned by contacting the printed part with a blade, scraper, abrasive component, or other mechanical instrument that can physically contact the printed part and apply a shear force to remove any unwanted materials. However, mechanical scraping methods may potentially damage the printed part or may unintentionally remove the printed part or portions thereof from the build surface, interrupting the printing process. Additionally, many conventional additive manufacturing methods subject the printed part to a cleaning fluid made of a liquid detergent or other solvent to remove unwanted materials. Typically, the cleaning fluid is applied to the printed part by a nozzle. However, the use of a cleaning fluid can lead to contamination if residual cleaning fluid is mixed with the printing material.

Accordingly, a need exists for a method for cleaning an additively manufactured part using one or more resins that avoids the need for mechanically scraping the additively manufactured part and/or avoids or minimizes contaminating the additively manufactured part or a portion thereof. A cleaning method that places the printed layer of a first material in a bath including a cleaning solution, the cleaning solution having a component of the second material, may allow the system to remove the excess first material from the build surface of the additively manufactured part without introducing any contaminants that may become part of the final additively manufactured part. The method of cleaning the additively manufactured part can create distinct material separation between layers without the reduction of mechanical properties in the printed part due to contamination. In addition, such a method avoids the need to mechanically scrape parts.

Reference will now be made to illustrative aspects, examples of which are illustrated in the accompanying drawings. It is to be understood that other aspects may be utilized, and structural and functional changes may be made. In addition, features of the various aspects may be combined or altered. As such, the following description is presented by way of illustration only and should not limit in any way the various alternatives and modifications that may be made to the illustrated aspects. In this disclosure, numerous specific details provide a thorough understanding of the subject disclosure. It should be understood that aspects of this disclosure may be practiced with other aspects not necessarily including all aspects described herein, etc.

As used herein, the words "example" and "exemplary" mean an instance, or illustration. The words "example" or "exemplary" do not indicate a key or preferred aspect or embodiment. The word "or" is intended to be inclusive rather an exclusive, unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggests otherwise.

As used herein, the terms "first," "second," "third," etc. may be used interchangeably to distinguish one component from another and are not intended to signify location or importance of the individual components.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," is not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10-percent margin.

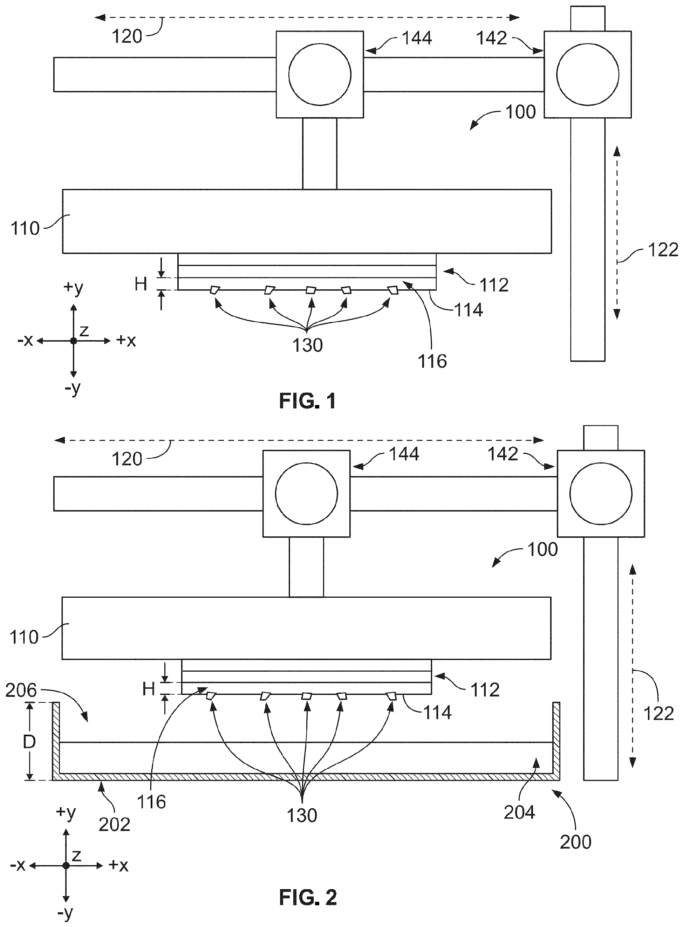

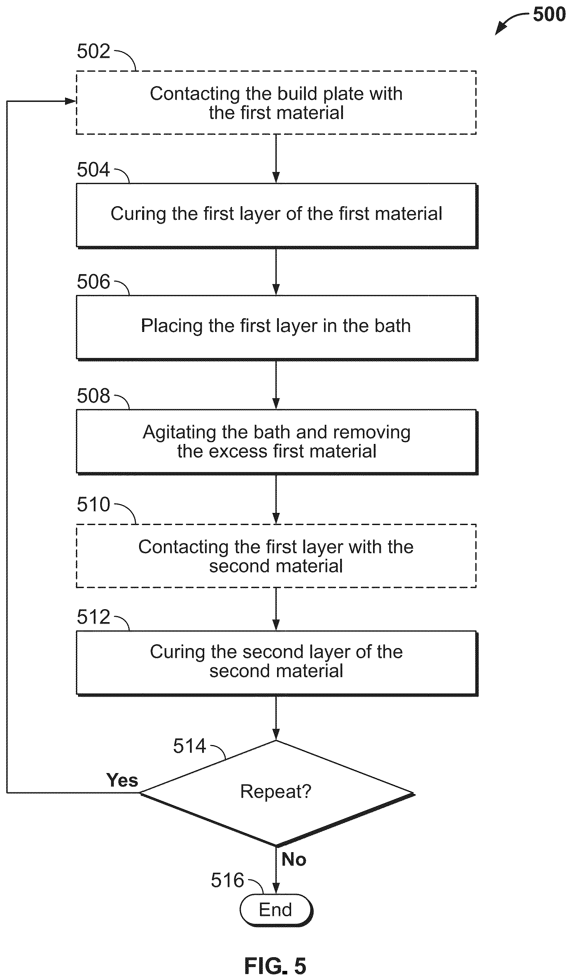

Referring to the drawings wherein identical reference numerals denote the same elements throughout the various views, FIGS. 1-4 schematically depict an apparatus 100 (e.g., an additive manufacturing apparatus) and FIG. 5 depicts a method 500 (e.g., a cleaning method) in which removal of extraneous material is driven by agitation of a cleaning bath 200 that includes a container 202 holding a cleaning solution 204. As will be explained in more detail below, it will be understood that other aspects and configurations of equipment may be used to carry out the methods described herein. The illustrative apparatus 100 includes at least a build plate 110 holding an additively manufactured part (e.g., a printed part 112) having a build surface 114 with excess material 130. Each of these components will be described in more detail below.

Aspects of the present disclosure relate to a method of cleaning an additively manufactured part or a portion thereof (e.g., one or more deposited layers of an additively manufactured part) by agitating a cleaning solution that includes materials that have a dual purpose of being both a cleaning material and at least a component of a material that is cured to form successive layer(s) of the additively manufactured part or a portion thereof. As such, the cleaning solution both removes excess material from a subsequent layer and provides additional material for additional layers. As is described herein, according to some aspects, the method for cleaning the additively manufactured part or a portion thereof includes curing a first layer of a first material on a build plate, placing the first layer in a bath of a cleaning solution, agitating the bath having the cleaning solution such that the excess first material is removed, and curing a second layer of a second material on the build plate. As described herein, the first material may include a first component, a second component, and a third component, the cleaning solution may include the third component, and the second material may also include the third component. As is described herein, according to other aspects, the method for cleaning the additively manufactured part or a portion thereof may include contacting the build plate with a first material, curing a first layer of the first material, placing the first layer in a bath of a cleaning solution, agitating the bath having the cleaning solution such that the excess first material is removed, contacting the first layer with a second material, and curing a second layer of the second material. As is described herein, the first material may include a first component, a second component, and a third component, the cleaning solution may include the third component, and the second material may include the third component. As is described herein, according to other aspects, the method for cleaning the additively manufactured part or a portion thereof may include curing a first layer of a first polymeric resin on a build plate, placing the first layer in a bath of a cleaning solution, agitating the bath having the cleaning solution such that the excess first polymeric resin is removed, and curing a second layer of a second polymeric resin on the build plate. As is described herein, the first polymeric resin may include a first component; the cleaning solution may include a third component; and the second polymeric resin may include the first component, a second component, and the third component.

Referring to FIG. 1, depicted is an illustrative apparatus 100 (e.g., an additive manufacturing apparatus or one or more components thereof). The apparatus 100 includes the build plate 110 that is moveable along a first axis 122 (e.g., a vertical axis or a substantially vertical axis in the +y/-y directions depicted in the coordinate axes of FIG. 1) and a second axis 120 (e.g., a horizontal axis or substantially horizontal axis in the +x/-x directions depicted in the coordinate axes of FIG. 1). In some aspects, the build plate 110 may be coupled to or otherwise driven by a first actuator 142 for imparting vertical movement to the build plate 110 along the first axis 122. The first actuator 142 may generally be any device or system that drives the vertical movement of the build plate 110. Illustrative examples include, but are not limited to, pneumatic actuators, hydraulic actuators, ballscrew electric actuators, linear electric actuators, linear pneumatic actuators, stepper motors, delta drives, mechanical arms, or the like. In some aspects, the build plate 110 may further be coupled to or otherwise driven by a second actuator 144 for imparting horizontal movement to the build plate 110 along the second axis 120. The second actuator 144 may drive the horizontal movement of the build plate 110 through any applicable mechanical means such as, but not limited to, pneumatic actuators, hydraulic actuators, ballscrew electric actuators, linear electric actuators, linear pneumatic actuators, stepper motors, delta drives, mechanical arms, or the like.

As depicted in FIGS. 2-3 and as discussed herein, the first axis 122 is a vertical axis or a substantially vertical axis (e.g., the +y/-y axis of the coordinate axes depicted in FIGS. 2-3) extending through a cleaning bath 200, comprising a container 202 holding a cleaning solution 204, and the build plate 110. The second axis 120 is a horizontal axis or substantially horizontal axis (e.g., the +x/-x axis of the coordinate axes depicted in FIGS. 2-3) that extends substantially parallel to the length of the build plate 110 and the container 202. The first axis 122 is orthogonal to the second axis 120. As used herein, the terms "above" and "uppermost" refer to positions along first axis 122 proximate or toward the original position of the build plate 110 (e.g., positions more in the +y direction of the coordinate axes of FIGS. 1-4 relative to other positions). Additionally, the terms "below," "under," and "lowermost" refer to positions along the first axis 122 proximate or toward the cleaning bath 200 (e.g., positions more in the -y direction of the coordinate axes of FIGS. 1-4 relative to other positions).

Referring to FIGS. 1-4, in some aspects, the apparatus 100 defines a build surface 114. In aspects, the build plate 110 may define the build surface 114, oriented substantially parallel to the second axis 120. In such aspects, the build surface 114 may be defined at a lowermost portion of the build plate 110 along the first axis 122. However, it should be appreciated that, as layers of material are deposited on the build plate 110 as described herein, the build surface 114 changes. More specifically, as shown in FIGS. 1-4, a printed part 112 is formed on the build plate 110 in a layerwise fashion. As each successive layer of the printed part 112 is formed, the build surface 114 changes to be the lowermost portion of the printed part 112 (e.g., the portion of the printed part 112 furthest in the -Y direction of the coordinate axes depicted in FIGS. 1-4).

As noted above, the printed part 112 includes at least one layer 116, each layer 116 being successively formed on the build surface 114. Forming layers 116 on the build surface 114 provides a new build surface 114 upon which formation of additional layers 116 occurs to create the printed part 112. In aspects, the printed part 112 is made of a single cured layer 116. In aspects, the printed part 112 is formed from the plurality of layers 116 that are iteratively formed to create the printed part 112. Each successive layer 116 is formed on the build surface 114 such that the printed part 112 is formed. Once one layer 116 is formed, the lowermost surface of the printed part 112 becomes the lowermost surface of the one layer 116 (e.g., the new build surface 114), and the subsequent layer 116 will be formed on the new build surface 114. In such aspects, the process of curing a portion of the printed part 112 is done iteratively such that each of a plurality of layers 116 of the printed part 112 is cured one after the other on the build surface 114. The iterative formation of layers 116 on the build surface 114 forms the completed printed part 112. In some aspects, the layers 116 may have identical (or substantially identical) shapes, thicknesses, and compositions. In other aspects, the layers 116 may have variable shapes, thicknesses, and/or compositions.

In aspects, the printed part 112 may be formed, in part, from a first material. The first material may be a material which is radiant-energy curable and which is capable of binding together to form a printed part 112 when exposed to radiant energy at a sufficiently high energy level. As used herein, the term "radiant-energy curable" refers to any material which solidifies in response to the application of radiant energy of a particular frequency and energy level. For example, the first material may include a photo-curable material or photopolymer resin containing photo-initiator compounds functioning to trigger a polymerization reaction, causing the resin to change from a liquid state to a solid state. The composition of the first material, including its chemistry and microstructure, may be selected as desired to suit a particular application. For example, the first material may contain a filler material that is metallic, ceramic, polymeric, and/or organic. For example, the first material may be a standard resin, flexible resin, heat-resistant resin, dental resin, ceramic-filled resin, metal-filled resin, cleaning resin, and/or a water-washable resin.

In aspects, the first material may be cured on the build surface 114. The first material generally includes a first component. For example, the first material may include one of or a combination of a standard resin, flexible resin, heat-resistant resin, dental resin, ceramic-filled resin, or a water-washable resin as the first component. In some aspects, the first material may further include a second component and/or a third component. In another example, the first material may include one of or a combination of a standard resin, flexible resin, heat-resistant resin, dental resin, ceramic-filled resin, or a water-washable resin as the second component. In another example, the first material may include one of or a combination of a standard resin, flexible resin, heat-resistant resin, dental resin, ceramic-filled resin, or a water-washable resin as the third component. The first material may further include a plurality of components, including one or more of a standard resin, flexible resin, heat-resistant resin, dental resin, ceramic-filled resin, metal-filled resin, cleaning resin, or a water-washable resin.

In aspects, some of the components of the first material can be the same or substantially the same. For instance, the first component may be the same as the second component, the first component may be the same as the third component, and/or the second component may be the same as the third component. For instance, the first component may be the same as any other component in the plurality of components, the second component may be the same as any other component in the plurality of components, and/or the third component may be the same as any other component in the plurality of components. In aspects, some of the components of the first material can be different relative to one another. For instance, the first component may be different from the second component, the first component may be different from the third component, and/or the second component may be different from the third component. For instance, the first component may be distinct from any other component in the plurality of components, the second component may be distinct from any other component in the plurality of components, and/or the third component may be distinct from any other component in the plurality of components. Each of the components of the first material has a component density. In aspects, some of the component densities of the first material can be the same. For instance, the component density of the first component may be the same as the component density of the second component, the component density of the first component may be the same as any other component density of the components in the plurality of components, and/or the component density of the second component may be the same as any other component density of the components in the plurality of components. In aspects, some of the component densities of the first material can be different. For instance, the component density of the first component may be different from the component density of the third component, and/or the component density of the second component may be different from the component density of the third component.

In some aspects, the component density of the third component may be less than both the component density of the first component and the component density of the second component. For instance, the component density of the first component is the same as the component density of the third component, and the component densities of the first component and the second component are greater than the component density of the third component. In such aspects, when the first material is placed in a liquid having a density similar to the component density of the third component, gravity may transport the first component and the second component away from the surface of said liquid. As such, if an amount of first material is on a layer 116 of the printed part 112, placing the layer 116 in a cleaning solution 204 including the third component and having a similar density to the third component would result in the first component and second component of the first material being transported away from the surface of the cleaning solution 204 and away from the printed part 112 by gravity.

In some aspects, the component density of any one of the first component, the second component, or the third component may be from about 0.9 grams per cubic centimeter (g/cm³) to about 5.0 g/cm³, such as, for example, from 0.9 g/cm³ to 4.5 g/cm³, from 0.9 g/cm³ to 4.0 g/cm³, from 0.9 g/cm³ to 3.5 g/cm³, from 0.9 g/cm³ to 3.0 g/cm³, from 0.9 g/cm³ to 2.5 g/cm³, from 0.9 g/cm³ to 2.0 g/cm³, from 0.9 g/cm³ to 1.5 g/cm³, from 0.9 g/cm³ to 1.0 g/cm³, from 1.0 g/cm³ to 5.0 g/cm³, from 1.0 g/cm³ to 4.5 g/cm³, from 1.0 g/cm³ to 4.0 g/cm³, from 1.0 g/cm³ to 3.5 g/cm³, from 1.0 g/cm³ to 3.0 g/cm³, from 1.0 g/cm³ to 2.5 g/cm³, from 1.0 g/cm³ to 2.0 g/cm³, from 1.0 g/cm³ to 1.5 g/cm³, from 1.5 g/cm³ to 5.0 g/cm³, from 1.5 g/cm³ to 4.5 g/cm³, from 1.5 g/cm³ to 4.0 g/cm³, from 1.5 g/cm³ to 3.5 g/cm³, from 1.5 g/cm³ to 3.0 g/cm³, from 1.5 g/cm³ to 2.5 g/cm³, from 1.5 g/cm³ to 2.0 g/cm³, from 2.0 g/cm³ to 5.0 g/cm³, from 2.0 g/cm³ to 4.5 g/cm³, from 2.0 g/cm³ to 4.0 g/cm³, from 2.0 g/cm³ to 3.5 g/cm³, from 2.0 g/cm³ to 3.0 g/cm³, from 2.0 g/cm³ to 2.5 g/cm³, from 2.5 g/cm³ to 5.0 g/cm³, from 2.5 g/cm³ to 4.5 g/cm³, from 2.5 g/cm³ to 4.0 g/cm³, from 2.5 g/cm³ to 3.5 g/cm³, from 2.5 g/cm³ to 3.0 g/cm³, from 3.0 g/cm³ to 5.0 g/cm³, from 3.0 g/cm³ to 4.5 g/cm³, from 3.0 g/cm³ to 4.0 g/cm³, from 3.0 g/cm³ to 3.5 g/cm³, from 3.5 g/cm³ to 5.0 g/cm³, from 3.5 g/cm³ to 4.5 g/cm³, from 3.5 g/cm³ to 4.0 g/cm³, from 4.0 g/cm³ to 5.0 g/cm³, from 4.0 g/cm³ to 4.5 g/cm³, or from 4.5 g/cm³ to 5.0 g/cm³, or any value or range between any two of these values (including endpoints).

In aspects, the first material may include a low-viscosity polymer resin. The first material can have a viscosity of less than or equal to 500 millipascal-seconds (mPa·s), such as less than or equal to 450 mPa·s, less than or equal to 400 mPa·s, less than or equal to 350 mPa·s, less than or equal to 300 mPa·s, less than or equal to 250 mPa·s, less than or equal to 200 mPa·s, less than or equal to 150 mPa·s, or less than or equal to 100 mPa·s. The first material can have a viscosity that allows the first material to be flowable, e.g., such that the first material can flow easily and fill the shape of cavities or the like, while also preventing or reducing excessive resistance to movement.

In aspects, the printed part 112 may be formed, in part, from a second material. The second material may be a material which is radiant-energy curable and which is capable of binding together to form a printed part 112 when exposed to radiant energy at a sufficiently high energy level. For example, the second material may include a known type of photo-curable material or photopolymer resin containing photo-initiator compounds functioning to trigger a polymerization reaction, causing the resin to change from a liquid state to a solid state. The composition of the second material, including its chemistry and microstructure, may be selected as desired to suit a particular application. For example, the second material may contain a filler material that is metallic, ceramic, polymeric, and/or organic. For example, the second material may be a standard resin, flexible resin, heat-resistant resin, dental resin, ceramic-filled resin, metal-filled resin, cleaning resin, and/or a water-washable resin.

In aspects, the second material may be cured on the build surface 114. The second material may be cured in the printed part 112. The second material may include the third component. For example, the second material may include one of or a combination of a standard resin, flexible resin, heat-resistant resin, dental resin, ceramic-filled resin, or a water-washable resin as the third component. The second material may further include a plurality of components, including one or more of a standard resin, flexible resin, heat-resistant resin, dental resin, ceramic-filled resin, metal-filled resin, cleaning resin, or a water-washable resin.

In aspects, some of the components of the second material can be the same. For instance, the third component may be the same as any other component in the plurality of components. In aspects, some of the components of the second material can be different. For instance, the third component may be distinct from any other component in the plurality of components. Each of the components of the second material has a component density, which may be different or the same with respect to one another. For example, illustrative component densities could be from about 0.9 g/cm³ to about 5.0 g/cm³,

In aspects, the second material may include a low-viscosity polymer resin. The second material can have a viscosity of less than or equal to 500 mPa·s, such as less than or equal to 450 mPa·s, less than or equal to 400 mPa·s, less than or equal to 350 mPa·s, less than or equal to 300 mPa·s, less than or equal to 250 mPa·s, less than or equal to 200 mPa·s, less than or equal to 150 mPa·s, or even less than or equal to 100 mPa·s. The second material can have a viscosity that allows the second material to be flowable, e.g., such that the second material can flow easily and fill the shape of cavities, while also preventing or reducing excessive resistance to movement.

The first material has a first density and a first viscosity. The second material has a second density and a second viscosity. In aspects, the first density is greater than the second density. In aspects, the first viscosity is greater than the second viscosity. In aspects, the second viscosity is greater than the first viscosity.

In some aspects, the printed part 112 may further include additional materials. The additional materials may include the same compositions to the first material and/or the second material, or may include different compositions to the first material and/or the second material. In some aspects, the method of cleaning the printed part 112 may also apply in between curing the second material and curing the first additional material and in between curing each additional material.

It may be desirable to produce a manufactured part having a smooth surface with uniform layers that only contain fully cured materials on the build surface 114. However, when curing a layer 116 on the printed part 112 through radiant energy, there is inevitably a gradient of energy intensity within the curable material that drops off from a focal point. This gradient may result in partially cured materials that may cling to the build surface 114 and disrupt the uniformity of each layer 116, adversely affecting the resulting mechanical properties of the printed part 112. In order to achieve such a manufactured part with a smooth surface and uniform layers, a portion of the cured material and/or partially cured materials may be removed. Additionally, after removing the printed part 112 from the first material, excess first material may remain on the new layer 116 of the printed part 112. The portion of uncured material and/or partially cured material that is removed may be referred to herein as "excess material." In some aspects, the excess material can be the material that has a density that is different from the expected density of the cured material. In some aspects, the excess material can be the material that has delaminated during curing. In some aspects, the excess material can be material including uncured or partially cured material that has mixed in the printed part 112 within 50 micrometers (µm) of the build surface 114. That is, "excess material" as used herein generally includes partially cured and/or uncured material remaining on the printed part 112 after curing a layer 116 of the material that is intended to remain. Such excess of the first material can be removed, as described herein.

Referring particularly to FIG. 2, depicted is the cleaning bath 200 that is utilized to carry out various processes with the build plate 110 as described herein. As mentioned herein, the cleaning bath 200 includes a container 202 having an open end 206 for receiving the build plate 110 and/or one or more layers 116 disposed thereon.

The container 202 has a depth D. In aspects, the depth D may be greater than the height H of a layer 116 of the printed part 112 so that the layer 116 can be immersed or at least partially disposed within the cleaning solution 204 in the container 202. For instance, the depth D of the container 202 may be greater than or equal to the height H of two layers 116, three layers 116, five layers 116, ten layers 116, fifteen layers 116, twenty layers 116, or all but one layer 116 of the printed part 112. In aspects, the depth D of the container 202 may be equivalent to or greater than the height of the printed part 112 after all of the layers 116 have been added. In aspects, the container 202 may extend beyond the dimensions of the build plate 110 and the build surface 114 positioned thereon (e.g., in the +x, -x, +y, -y, +z, and -z directions of the coordinate axes of FIG. 2). For instance, the container 202 may have a larger length along the second axis 120 than the length of the build plate 110 and/or the build surface 114. For instance, the container 202 may have a larger width than the width of the build plate 110 and/or the build surface 114. In other aspects, the width of the container 202 may directly or approximately correspond to the width of the build plate 110 or the build surface 114. The container 202 may have a wall thickness determining the thickness of all the faces of the container 202. In aspects, the wall thickness of the container 202 may be uniform on all the faces of the container. In other aspects, the wall thickness of the container 202 may be any suitable thickness to maintain mechanical integrity of the container 202 while engaging with the apparatus 100, as discussed herein. In aspects, the wall thickness of the container can be varied on each of the faces of the container 202. In aspects, the container 202, or selected portions thereof, may be made of a material that, when subjected to agitation, does not break. For example, the container 202 may be made at least partially of flexible plastic, stainless steel, or strengthened glass.

The cleaning bath 200 further includes a cleaning solution 204 contained within the container 202. In aspects, the cleaning solution 204 has a depth that is greater than the height of a layer 116 of the printed part 112. In aspects, the cleaning solution 204 has a depth that is greater than or equal to 50% of the depth of the container 202, such as a depth that is greater than or equal to 55%, greater than or equal to 60%, greater than or equal to 65%, greater than or equal to 70%, greater than or equal to 75%, greater than or equal to 80%, or even greater than or equal to 85% of the depth of the container 202. In aspects, the cleaning solution 204 may have a depth that is less than or equal to 50% of the depth of the container 202, such as a depth that is less than or equal to 45%, less than or equal to 40%, less than or equal to 35%, less than or equal to 30%, less than or equal to 25%, less than or equal to 20%, or even less than or equal to 15% the depth of the container. In aspects, the cleaning solution has a depth that is equivalent or substantially equivalent to the height of one layer 116. In aspects, the cleaning solution has depth that is equivalent to the height of more than one layer 116. In aspects, the cleaning solution 204 has a depth that is equivalent or substantially equivalent to the height of the printed part 112 after all of the layers 116 have been added. In aspects, the cleaning solution 204 may be manually placed in the container 202 via pouring, siphoning, or other equivalent methods.

In aspects, the cleaning solution 204 may be a photo-curable material or photopolymer resin. The photo-curable material or photopolymer resin may contain photo-initiator compounds functioning to trigger a polymerization reaction, causing the resin to change from a liquid state to a solid state. The composition of the cleaning solution 204, including its chemistry and microstructure, may be selected as desired to suit a particular application. For example, the cleaning solution 204 may contain a filler material that is metallic, ceramic, polymeric, and/or organic. For example, the cleaning solution 204 may be a standard resin, flexible resin, heat-resistant resin, dental resin, ceramic-filled resin, metal-filled resin, cleaning resin, and/or a water-washable resin.

In aspects, the cleaning solution 204 may include the third component. For example, the cleaning solution 204 may include one of or a combination of a standard resin, flexible resin, heat-resistant resin, dental resin, ceramic-filled resin, or a water-washable resin as the third component. In aspects, the cleaning solution 204 may further include a plurality of components, including one or more of a standard resin, flexible resin, heat-resistant resin, dental resin, ceramic-filled resin, metal-filled resin, cleaning resin, a water-washable resin, or a cleaning liquid such as isopropyl alcohol (IPA).

In aspects, the cleaning solution 204 may include the first component. For example, the cleaning solution 204 may include one of or a combination of a standard resin, flexible resin, heat-resistant resin, dental resin, ceramic-filled resin, or a water-washable resin as the first component. In aspects, the cleaning solution 204 may further include a plurality of components, including one or more of a standard resin, flexible resin, heat-resistant resin, dental resin, ceramic-filled resin, or a water-washable resin.

In aspects, some of the components of the cleaning solution 204 can be the same. For instance, the first component of the cleaning solution 204 may be the same as any other component in the plurality of components of the cleaning solution 204. In aspects, some of the components of the cleaning solution 204 can be different. For instance, the first component of the cleaning solution 204 may be distinct from any other component in the plurality of components of the cleaning solution 204. In aspects, the cleaning solution 204 may include the first material. In aspects, the cleaning solution 204 may include the second material. In aspects, the first component of the cleaning solution 204 has a density lower than that of the first material. In aspects, the first component of the cleaning solution 204 has a density lower than that of the second material.

Including the third component, which is also included in both the first material and the second material, in the cleaning solution 204 ensures that no new materials that are not also included in the printed part 112 are introduced to clean the printed part 112 as the printed part 112 is immersed in the cleaning solution 204. Additionally, in aspects where the density of a component of the cleaning solution 204 is less than that of either the first material or the second material, the cleaning solution 204 is able to remove excess first material from the printed part 112 via gravity. That is, when the densities of the first material and the second material are greater than the density of a component of the cleaning solution 204, the first material and the second material will sink to the bottom of the cleaning solution 204, leaving the printed part 112 free from excess first material and/or second material.

In some aspects, the density of any component of the cleaning solution may be from about 0.9 g/cm³ to about 5.0 g/cm³, such as from 0.9 g/cm³ to 4.5 g/cm³, from 0.9 g/cm³ to 4.0 g/cm³, from 0.9 g/cm³ to 3.5 g/cm³, from 0.9 g/cm³ to 3.0 g/cm³, from 0.9 g/cm³ to 2.5 g/cm³, from 0.9 g/cm³ to 2.0 g/cm³, from 0.9 g/cm³ to 1.5 g/cm³, from 0.9 g/cm³ to 1.0 g/cm³, from 1.0 g/cm³ to 5.0 g/cm³, from 1.0 g/cm³ to 4.5 g/cm³, from 1.0 g/cm³ to 4.0 g/cm³, from 1.0 g/cm³ to 3.5 g/cm³, from 1.0 g/cm³ to 3.0 g/cm³, from 1.0 g/cm³ to 2.5 g/cm³, from 1.0 g/cm³ to 2.0 g/cm³, from 1.0 g/cm³ to 1.5 g/cm³, from 1.5 g/cm³ to 5.0 g/cm³, from 1.5 g/cm³ to 4.5 g/cm³, from 1.5 g/cm³ to 4.0 g/cm³, from 1.5 g/cm³ to 3.5 g/cm³, from 1.5 g/cm³ to 3.0 g/cm³, from 1.5 g/cm³ to 2.5 g/cm³, from 1.5 g/cm³ to 2.0 g/cm³, from 2.0 g/cm³ to 5.0 g/cm³, from 2.0 g/cm³ to 4.5 g/cm³, from 2.0 g/cm³ to 4.0 g/cm³, from 2.0 g/cm³ to 3.5 g/cm³, from 2.0 g/cm³ to 3.0 g/cm³, from 2.0 g/cm³ to 2.5 g/cm³, from 2.5 g/cm³ to 5.0 g/cm³, from 2.5 g/cm³ to 4.5 g/cm³, from 2.5 g/cm³ to 4.0 g/cm³, from 2.5 g/cm³ to 3.5 g/cm³, from 2.5 g/cm³ to 3.0 g/cm³, from 3.0 g/cm³ to 5.0 g/cm³, from 3.0 g/cm³ to 4.5 g/cm³, from 3.0 g/cm³ to 4.0 g/cm³, from 3.0 g/cm³ to 3.5 g/cm³, from 3.5 g/cm³ to 5.0 g/cm³, from 3.5 g/cm³ to 4.5 g/cm³, from 3.5 g/cm³ to 4.0 g/cm³, from 4.0 g/cm³ to 5.0 g/cm³, from 4.0 g/cm³ to 4.5 g/cm³, or even from 4.5 g/cm³ to 5.0 g/cm³, or any value or range between any of the values noted above (including endpoints).

In aspects, the cleaning solution 204 may include a low-viscosity polymer resin. The cleaning solution 204 can have a viscosity of less than or equal to 10 Pascal-seconds (Pa·s), such as less than or equal to 7.5 Pa·s, less than or equal to 5.0 Pa·s, less than or equal to 2.5 Pa·s, less than or equal to 1.0 Pa·s, less than or equal to 0.50 Pa·s, less than or equal to 0.45 Pa·s, less than or equal to 0.40 Pa·s, less than or equal to 0.35 Pa·s, less than or equal to 0.30 Pa·s, less than or equal to 0.25 Pa·s, less than or equal to 0.20 Pa·s, less than or equal to 0.15 Pa·s, less than or equal to 0.10 Pa·s, less than or equal to 0.05 Pa·s, less than or equal to 0.01 Pa·s, less than or equal to 0.005 Pa·s, or even less than or equal to 0.001 Pa·s. The cleaning solution 204 can have a viscosity that allows the cleaning solution 204 to be flowable, e.g., such that the cleaning solution 204 can flow easily and fill the shape of cavities, while also preventing or reducing excessive resistance to movement.

Examples of the operation of the apparatus 100 to clean the printed part 112 will now be described in detail. As depicted in FIG. 1-4, after curing a first layer 116 of a first material on the printed part 112, the first layer 116 is placed in the cleaning bath 200, the cleaning bath 200 is agitated such that the excess first material is removed, and the second layer 116 of a second material is cured on the printed part 112. In aspects, the printed part 112 is placed in the first material. In aspects, only the build surface 114 may be placed in the first material. In aspects, the layer 116 most proximate to the build surface 114 may be placed in the first material. In aspects, more than one layer 116 may be placed in the first material. In aspects, the printed part 112 may be placed in the first material at a depth that may be less than or equal to 200 µm, such as less than or equal to 175 µm, less than or equal to 150 µm, less than or equal to 125 µm, less than or equal to 100 µm, less than or equal to 90 µm, less than or equal to 80 µm, less than or equal to 70 µm, less than or equal to 60 µm, less than or equal to 50 µm, less than or equal to 40 µm, less than or equal to 30 µm, less than or equal to 20 µm, or even less than or equal to 10 µm.

Referring to FIG. 1, in aspects, a first layer 116 of the first material is cured on the build surface 114. In aspects, a method of curing the first layer 116 may include causing the first material to solidify due to exposure to radiant energy. In aspects, the method of curing the first layer 116 may include the radiant energy passing through transparent or partially transparent material to access the first material. In aspects, the radiant energy may be produced by an electromagnetic source. The electromagnetic source may be capable of generating a radiant energy pattern image such that a projection of radiant energy comprising an array of pixels is formed. For example, radiant energy pattern images may be created by a digital light processing (DLP) projector, a 2D array of LEDs, a 2D array of lasers, or optically addressed light valves. The electromagnetic source may also interact with other light-manipulating elements, such as mirrors, prisms, optical filters, splitters, optical fibers, photo-optical sensors, and/or lenses. In aspects, the electromagnetic source may be a scanned beam apparatus that is capable of generating a radiant energy beam of suitable energy level and other operating characteristics to cure portions of the first layer 116 and to scan the beam over the first material in a desired pattern. For instance, the radiant energy beam may be created by lasers or electron beam guns. In aspects, the electromagnetic source may be any device operable to generate a beam of a suitable energy level and with suitable frequency characteristics to cure at least a portion of the first layer 116. In aspects, the first material may be a slurry forming a cast layer on a foil sheet wherein the radiant energy passes through the foil sheet to cure the slurry. In aspects, the first material may be in a vat (e.g., a vessel or the like separate from container 202) that allows radiant energy to pass through the vat to cure the first material. The radiant energy may be electromagnetic radiation, such as ultraviolet light.

As shown in FIG. 1, in aspects, once the first layer 116 has been cured to adhere to the previous build surface 114 of the printed part 112, the build plate 110 is raised along the first axis 122 to define the new build surface 114 at the lowermost face of the most recently formed layer 116 at the desired thickness H for the next layer to iteratively produce another layer 116 of the same material. The thickness H of the layers 116 may be less than or equal to 200 µm, such as less than or equal to 175 µm, less than or equal to 150 µm, less than or equal to 125 µm, less than or equal to 100 µm, less than or equal to 90 µm, less than or equal to 80 µm, less than or equal to 70 µm, less than or equal to 60 µm, less than or equal to 50 µm, less than or equal to 40 µm, less than or equal to 30 µm, less than or equal to 20 µm, or even less than or equal to 10 µm. In aspects, the thicknesses H of the layers 116 may be uniform or the thickness of the layers 116 may be varied. The thickness H of each layer 116 is defined by some combination of the cure depth, which is the thickness of the material curable by the radiant energy, and the movement of the build plate 110. For example, the build plate 110 could be positioned along the first axis 122 such that the build surface 114 just reaches the cure depth to cure a layer 116 with a relatively large thickness, or the build plate 110 could be positioned under the cure depth such that the layer 116 cures on the build surface 114 with less than its maximum available thickness. The thickness H of each layer 116 may affect the speed of the additive manufacturing process and the resolution of the resulting printed part 112. That is, thicker layers 116 may take longer to cure to allow the radiant energy curing the first material to reach the topmost portion of the layer 116 and may have a reduced resolution as the radiant energy loses strength passing through the layer 116. The thicknesses H of the layers 116 may be variable, with a larger layer 116 thickness H being used to speed the process in portions of the printed part 112 not requiring high accuracy, and a smaller layer 116 thickness H being used where higher accuracy is required, at the expense of efficiency. In aspects, the apparatus 100 may be configured to control the height and positioning of the build plate 110 as to determine the thickness H of the layer 116. For example, the apparatus may control the strength of the radiant energy, the height of the build plate 110, or the transparency of the container for the first material to control the thickness H of the layer 116.

Referring to FIGS. 1-4, the container 202 may be movable to align with the build plate 110 for the purposes of receiving the build plate 110 via the open end 206. For example, the cleaning bath 200 may be movable along the first axis 122 and/or the second axis 120. In other aspects, the container 202 may be stationary. In such aspects, various components (e.g., the first actuator 142, the second actuator 144, or a combination of the first actuator 142 and the second actuator 144) may move the build plate 110 vertically along the first axis 122 and/or horizontally along the second axis 120 to align the build plate 110 with the open end 206 of the container 202 and lower the build plate 110 into the container 202 to contact a portion of the cleaning bath 200. The build plate 110 may move along the first axis 122 at a speed of greater than or equal to 25 millimeters per second (mm/s), greater than or equal to 50 mm/s, or even greater than or equal to 75 mm/s relative to the container 202. The build plate 110 may move along the first axis 122 at a speed of less than or equal to 150 millimeters per second (mm/s), less than or equal to 125 mm/s, or even less than or equal to 100 mm/s relative to the container 202. The build plate 110 may move along the second axis 120 at a speed of greater than or equal to 25 millimeters per second (mm/s), greater than or equal to 50 mm/s, or even greater than or equal to 75 mm/s relative to the container 202. In aspects, the build plate 110 may move along the second axis 120 at a speed of less than or equal to 150 mm/s, less than or equal to 125 mm/s, or even less than or equal to 100 mm/s relative to the container 202. It should be understood that the direction of travel in the first axis 122 of the build plate 110 relative to the container 202 may be in either direction along the first axis 122. It should also be understood that the direction of travel in the second axis 120 of the build plate 110 relative to the container 202 may be in either direction along the second axis 120. The build plate 110 is translatable along the second axis 120 to align the build plate 110 with the container 202 such that the build plate 110 may be moved (e.g., lowered) to contact a portion of either a curable material or a cleaning solution 204 positioned below the build plate 110 along the first axis 122. However, other speeds are contemplated and included in the scope of the present disclosure.

Referring to FIGS. 2-3, in aspects, the printed part 112 is placed in the cleaning bath 200. In aspects, only the build surface 114 may be placed in the cleaning bath 200. In aspects, the first layer 116 may be placed in the cleaning bath 200. In aspects, more than one layer 116 may be placed in the cleaning bath 200. In aspects, the printed part 112 may be placed in the cleaning bath 200 at a depth that may be less than or equal to 200 µm, such as less than or equal to 175 µm, less than or equal to 150 µm, less than or equal to 125 µm, less than or equal to 105 µm, less than or equal to 90 µm, less than or equal to 80 µm, less than or equal to 70 µm, less than or equal to 60 µm, less than or equal to 50 µm, less than or equal to 40 µm, less than or equal to 30 µm, less than or equal to 20 µm, or even less than or equal to 10 µm. In aspects, the first layer 116 may be placed in the cleaning bath 200 at a depth that may be less than or equal to 200 µm, such as less than or equal to 175 µm, less than or equal to 150 µm, less than or equal to 125 µm, less than or equal to 105 µm, less than or equal to 90 µm, less than or equal to 80 µm, less than or equal to 70 µm, less than or equal to 60 µm, less than or equal to 50 µm, less than or equal to 40 µm, less than or equal to 30 µm, less than or equal to 20 µm, or even less than or equal to 10 µm. In aspects, the printed part 112 may be placed in the cleaning bath 200 such that the excess first material is in contact with the cleaning solution 204. In aspects, the printed part 112 is placed in the cleaning bath 200 at a depth that allows for the part to interact with the cleaning solution during agitation, as described herein.

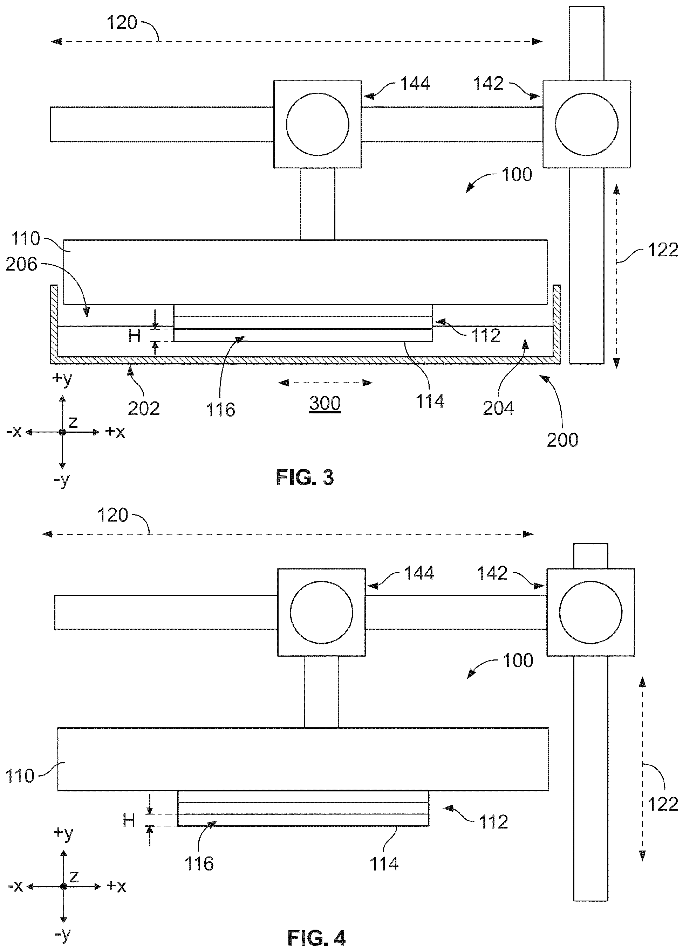

Referring to FIG. 3, in aspects, the cleaning bath 200 is be agitated. The purpose of agitating the cleaning bath 200 is induce vibrations 300 in the cleaning solution 204 such that the excess first material on the printed part 112 is removed. The vibrations 300 may be created by ultrasonicating, bubbling, vibrating, and/or other mechanisms that impart movement upon the cleaning bath 200, particularly the cleaning solution 204 thereof. As used herein, "ultrasonicating" refers to imparting ultrasonic waves in the cleaning bath to apply shear force to remove excess first material from the printed part 112. For example, the ultrasonic waves may be at a frequency from about 10 kHz to about 170 kHz. As used herein, "bubbling" refers to a process of agitating the liquid to create and collapse air bubbles in a liquid (e.g., on the surface of the liquid). The creation and collapse of the bubbles causes a shear force to be applied to the printed part 112 such that the excess first material is removed from the printed part 112. In some aspects, vibrating the container 202 may involve moving the container 202 in one direction and then the other along the second axis 120. In some aspects, vibrating the container 202 may involve moving the container 202 in one direction and then the other along the first axis 122. In some aspects, vibrating the container 202 may involve both horizontal movement in the second axis 120 and vertical movement in the first axis 122.

In aspects, agitating the cleaning bath 200 includes agitating the bath for a cleaning time such that excess first material is removed from the printed part 112. The cleaning time may be from about 1 second (s) to about 30 minutes (min). In aspects, the cleaning time may be such that at least 50 weight percent (wt.%) of the excess first material is removed from the printed part 112. For instance, the cleaning time may be a sufficient amount of time such that at least 55 wt.%, at least 60 wt.%, at least 65 wt.%, at least 70 wt.%, at least 75 wt.%, at least 80 wt.%, at least 90 wt.%, at least 95 wt.%, or even at least 99 wt.% of the excess first material is removed from the printed part 112.

Agitating the cleaning bath 200 serves the purpose of creating the vibrations 300 in the cleaning solution 204 such that shear force is applied to the printed part 112 and removes excess first material clinging to the printed part 112. Removing the excess first material by agitating the cleaning bath 200 increases the uniformity of each layer 116, reduces the surface roughness of the build surface 114, and reduces cross contamination between the materials. In aspects, the cleaning solution 204 is substantially free of materials not included in the printed part 112 such that none of the chemistry of the first material, the second material, or the printed part 112 is altered. In aspects, the cleaning solution 204 is free or substantially free of materials not included in the printed part 112 such that none of the rheology of the first material, second material, or the printed part 112 is altered.

Referring to FIG. 4, in aspects, the printed part 112 is substantially free of the excess first material. In some aspects, after agitating the cleaning bath 200, the printed part 112 may be placed in the second material. In aspects, only the build surface 114 may be placed in the second material. In aspects, the first layer 116 may be placed in the second material. In aspects, more than one layer 116 may be placed in the second material. In aspects, the printed part 112 may be placed in the second material at a depth that may be less than or equal to 100 µm, such as less than or equal to 90 µm, less than or equal to 80 µm, less than or equal to 70 µm, less than or equal to 60 µm, less than or equal to 50 µm, less than or equal to 40 µm, less than or equal to 30 µm, less than or equal to 20 µm, or even less than or equal to 10 µm.

Referring again to FIG. 1, in aspects, a second layer 116 of the second material is cured on the build surface 114. In aspects, the method of curing the second layer 116 is identical to the method of curing the first layer 116. As shown in FIG. 4, in aspects, once the second layer 116 has been cured to adhere to the previous build surface 114 of the printed part 112, the build plate 110 may be raised along the first axis 122 to define the new build surface 114 at the lowermost face of the most recently formed layer 116 at the desired thickness for the next layer to iteratively produce another layer 116 of the same material. In aspects, the range of thickness of the second layer 116 is identical to the first layer 116.

FIG. 5 depicts a block diagram of an illustrative method 500 for forming and cleaning an additively manufactured part or a portion thereof using the apparatus 100 (FIG. 1). At block 502, the method 500 includes optionally contacting the build plate 110 with the first material in preparation for curing the first material. At block 504, the method 500 includes curing the first layer 116 of the first material on the build plate 110, adding to the printed part 112. At block 506, the method 500 further includes placing the first layer 116 in the cleaning bath 200 of the cleaning solution 204 such that any excess first material is contacting the cleaning solution 204. At block 508, the method 500 further includes agitating the cleaning bath 200 such that the excess first material is substantially removed from the printed part 112. At block 510, the method 500 includes optionally contacting the build plate 110 with the second material in preparation for curing the second material. At block 512, the method 500 further includes curing the second layer 116 of the second material on the build plate 110, adding to the printed part 112.

In aspects, at block 514, the method 500 may further include a determination as to whether the steps of contacting, curing, placing, agitating, contacting, and curing are to be repeated. If the steps are to be repeated (REPEAT? = YES), the method 500 returns to block 502. If the steps are not to be repeated (REPEAT? = NO), at block 516, the process may end.

The methods and apparatuses described herein have several advantages over conventional methods. In particular, the methods discussed herein clean the surfaces of additively printed layers, improving dimensional accuracy, reducing surface roughness, and forming a more uniform interlayer microstructure than conventional additively printed materials. The methods reduce the contamination of printed materials formed from two distinct materials while eliminating the need for a cleaning solvent made of a third material or mechanical cleaning apparatus that can increase cost, inhibit the mechanical properties, and/or slow production.

It should now be understood that the present disclosure relates to methods for forming and cleaning additively manufactured parts or portions thereof. All of the features disclosed in this specification (including any accompanying claims, abstract and drawings), and/or all of the steps of any method or process so disclosed, may be combined in any combination, except combinations where at least some of such features and/or steps are mutually exclusive.

What has been described above includes examples of the present specification. It is, of course, not possible to describe every conceivable combination of components or methodologies for purposes of describing the present specification, but one of ordinary skill in the art may recognize that many further combinations and permutations of the present specification are possible. Each of the components described above may be combined or added together in any permutation to define aspects disclosed herein. Accordingly, the present specification is intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

It is noted that the various aspects described herein may include other components and/or functionality. It is further noted that while various aspects refer to an additive manufacturing apparatus and method, various other systems may be utilized in view of aspects described herein. The present disclosure is not restricted to the details of the foregoing aspect(s). The present disclosure extends to any novel one, or any novel combination, of the features disclosed in this specification (including any accompanying claims, abstract, and drawings), or to any novel one, or any novel combination, of the steps of any method or process so disclosed.

Additional aspects of the present disclosure are provided by the subject matter of the following clauses:

A method of cleaning one or more deposited layers of an additively manufactured part, the method comprising: curing a first layer of a first material on a build plate, wherein the first material comprises a first component, a second component, and a third component; placing the first layer in a bath of a cleaning solution comprising the third component; agitating the bath such that an excess of the first material is removed; and curing a second layer of a second material, wherein the second material comprises the third component.

The method of any preceding clause, further comprising contacting the build plate with the first material before curing the first layer on the build plate.

The method of any preceding clause, further comprising contacting the first layer with the second material before curing the second layer.

The method of any preceding clause, further comprising iteratively curing, placing, agitating, and curing.

The method of any preceding clause, wherein the cleaning solution further comprises a low-viscosity polymer resin.

The method of any preceding clause, wherein the cleaning solution comprises a viscosity of less than or equal to 0.5 Pa·s.

The method of any preceding clause, wherein the cleaning solution further comprises the first material.

The method of any preceding clause, wherein the cleaning solution further comprises the second material.

The method of any preceding clause, wherein the cleaning solution comprises a photo-curable material or a photopolymer resin.

The method of any preceding clause, wherein the cleaning solution consists of the third component.

The method of any preceding clause, wherein the first component has a first density, the second component has a second density, and the first density and the second density are greater than a third density of the third component.

The method of any preceding clause, wherein agitating the bath comprises agitating for a cleaning time, the cleaning time being from about one second to about thirty minutes.

The method of any preceding clause, wherein the cleaning time is an amount of time that causes greater than or equal to 60 wt.% of the excess of the first material to be removed from the build plate.

The method of any preceding clause, wherein agitating the bath comprises agitating the bath until greater than or equal to 60 wt.% of the excess of the first material is removed from the build plate.

The method of any preceding clause, wherein placing the first layer in the bath comprises immersing less than or equal to 100 µm of the first layer into the cleaning solution.

The method of any preceding clause, wherein agitating the bath comprises ultrasonicating the bath.

The method of any preceding clause, wherein agitating the bath comprises bubbling the bath.

The method of any preceding clause, wherein agitating the bath comprises vibrating a container comprising the bath.

The method of any preceding clause, wherein placing the first layer in the bath comprises moving the build plate with a mechanical arm movable along a linear rail.

The method of any preceding clause, wherein placing the first layer in the bath comprises moving the mechanical arm along a length of the linear rail.

The method of any preceding clause, wherein placing the first layer in the bath comprises utilizing a pneumatic assembly to move the mechanical arm along the linear rail.

The method of any preceding clause, wherein curing the second layer comprises curing the second layer with the same thickness as the first layer after agitating the bath.

The method of any preceding clause, wherein the first material comprises a photo-curable material or a photopolymer resin.

The method of any preceding clause, wherein the second material comprises a photo-curable material or a photopolymer resin.

A method for cleaning one or more deposited layers of an additively manufactured part, the method comprising: contacting a build plate with a first material comprising a first component, a second component, and a third component; curing a first layer of the first material; placing the first layer in a bath of a cleaning solution comprising the third component; agitating the bath such that an excess of the first material is removed; contacting the first layer with a second material comprising the third component; and curing a second layer of the second material. The method of any preceding clause, further comprising iteratively contacting, curing, placing, agitating, contacting, and curing.

The method of any preceding clause, wherein the cleaning solution further comprises a low-viscosity polymer resin.

The method of any preceding clause, wherein the cleaning solution comprises a viscosity of less than or equal to 0.5 Pa·s.

The method of any preceding clause, wherein the cleaning solution further comprises the first material.

The method of any preceding clause, wherein the cleaning solution further comprises the second material.

The method of any preceding clause, wherein the cleaning solution comprises a photo-curable material or a photopolymer resin.

The method of any preceding clause, wherein the first component has a first density, the second component has a second density, and the first density and the second density are greater than a third density of the third component.

The method of any preceding clause, wherein agitating the bath comprises agitating for a cleaning time, the cleaning time being from about five seconds to about thirty minutes.

The method of any preceding clause, wherein the cleaning time is an amount of time that causes greater than or equal to 60 wt.% of the excess of the first material to be removed from the build plate.

The method of any preceding clause, wherein agitating the bath comprises agitating the bath until greater than or equal to 60 wt.% of the excess of the first material is removed from the build plate.

The method of any preceding clause, wherein placing the first layer in the bath comprises less than or equal to 100 µm of the first layer contacting the cleaning solution.

The method of any preceding clause, wherein agitating the bath comprises ultrasonicating the bath or bubbling the bath.

The method of any preceding clause, wherein agitating the bath comprises bubbling the bath.

The method of any preceding clause, wherein agitating the bath comprises vibrating a vessel comprising the bath.

The method of any preceding clause, wherein placing the first layer in the bath comprises moving the build plate with a mechanical arm.

The method of any preceding clause, wherein placing the first layer in the bath comprises moving the build plate with the mechanical arm attached to a linear rail.

The method of any preceding clause, wherein placing the first layer in the bath comprises moving the mechanical arm along the linear rail through pneumatics.

The method of any preceding clause, wherein curing the second layer comprises curing the second layer with the same thickness as the first layer after agitating the bath.

The method of any preceding clause, wherein the first material comprises a photo-curable material or a photopolymer resin.

The method of any preceding clause, wherein the second material comprises a photo-curable material or a photopolymer resin.

A method for cleaning one or more deposited layers of an additively manufactured part, the method comprising: curing a first layer of a first polymeric resin on a build plate, wherein the first polymeric resin comprises a first component; placing the first layer in a bath of a cleaning solution comprising a third component; agitating the bath such that an excess of the first polymeric resin is removed from the build plate; and curing a second layer of a second polymeric resin on the build plate, wherein the second polymeric resin comprises the first component, a second component, and the third component.

The method of any preceding clause, further comprising contacting the build plate with the first polymeric resin before curing the first layer on the build plate.

The method of any preceding clause, further comprising contacting the build plate with the second polymeric resin before curing the second layer on the build plate.

The method of any preceding clause, further comprising iteratively curing, placing, agitating, and curing.

The method of any preceding clause, wherein the cleaning solution further comprises a low-viscosity polymer resin.

The method of any preceding clause, wherein the cleaning solution comprises a viscosity of less than or equal to 0.5 Pa·s.

The method of any preceding clause, wherein the cleaning solution further comprises the first polymeric resin.

The method of any preceding clause, wherein the cleaning solution further comprises the second polymeric resin.

The method of any preceding clause, wherein the cleaning solution comprises a photo-curable material or a photopolymer resin.

The method of any preceding clause, wherein the first component has a first density, the second component has a second density, and the first density and the second density are greater than a third density of the third component.

The method of any preceding clause, wherein agitating the bath comprises agitating for a cleaning time, the cleaning time being from about one second to about thirty minutes.

The method of any preceding clause, wherein the cleaning time is an amount of time that causes greater than or equal to 60 wt.% of the excess of the first polymeric resin to be removed from the build plate.

The method of any preceding clause, wherein agitating the bath comprises agitating the bath until greater than or equal to 60 wt.% of the first polymeric resin is removed from the build plate.

The method of any preceding clause, wherein placing the first layer in the bath comprises less than or equal to 100 µm of the first layer contacting the cleaning solution.

The method of any preceding clause, wherein agitating the bath comprises ultrasonicating.

The method of any preceding clause, wherein agitating the bath comprises bubbling the bath.

The method of any preceding clause, wherein agitating the bath comprises vibrating a vessel comprising the bath.

The method of any preceding clause, wherein placing the first layer in the bath comprises moving the build plate with a mechanical arm in a first axis and then in a second axis, the second axis being orthogonal to the first axis.

The method of any preceding clause, wherein placing the first layer in the bath comprises moving the build plate with the mechanical arm attached to a linear rail.

The method of any preceding clause, wherein placing the first layer in the bath comprises moving the mechanical arm along the linear rail through pneumatics.

The method of any preceding clause, wherein curing the second layer comprises curing the second layer with the same thickness as the first layer after agitating the bath.

The method of any preceding clause, wherein the first polymeric resin comprises a photo-curable material or a photopolymer resin.

The method of any preceding clause, wherein the second polymeric resin comprises a photo-curable material or a photopolymer resin.

## Claims

1. A method (500) for cleaning one or more deposited layers (116) of an additively manufactured part, the method (500) comprising:
curing a first layer (116) of a first material on a build plate (110), wherein the first material comprises a first component, a second component, and a third component;
placing the first layer (116) in a bath (200) of a cleaning solution (204) comprising the third component;
agitating the bath (200) such that an excess of the first material is removed; and
curing a second layer (116) of a second material, wherein the second material comprises the third component.

2. The method (500) according to claim 1, further comprising contacting the build plate (110) with the first material before curing the first layer (116) on the build plate (110).

3. The method (500) according to claim 1, further comprising contacting the first layer (116) with the second material before curing the second layer (116).

4. The method (500) according to any one of the preceding claims, wherein the cleaning solution (204) further comprises a low-viscosity polymer resin.

5. The method (500) according to any one of claims 1-3, wherein the cleaning solution (204) further comprises the first material.

6. The method (500) according to any one of claims 1-3, wherein the cleaning solution (204) further comprises the second material.

7. The method (500) according to any one of claims 1-3, wherein the cleaning solution (204) comprises a photo-curable material or a photopolymer resin.

8. The method (500) according to any one of the preceding claims, wherein the first component has a first density, the second component has a second density, and the first density and the second density are greater than a third density of the third component.

9. The method (500) according to any one of the preceding claims, wherein agitating the bath (200) comprises agitating for a cleaning time, the cleaning time being from about one second to about thirty minutes.

10. The method (500) according to any one of claims 1-8, wherein agitating the bath (200) comprises agitating the bath (200) until greater than or equal to 60 wt.% of the excess of the first material is removed from the build plate (110).

11. The method (500) according to any one of the preceding claims, wherein placing the first layer (116) in the bath (200) comprises immersing less than or equal to 200 µm of the first layer (116) into the cleaning solution (204).

12. The method (500) according to any one of the preceding claims, wherein placing the first layer (116) in the bath (200) comprises moving the build plate (110) with a mechanical arm along a linear rail.

13. The method (500) according to any one of the preceding claims, wherein agitating the bath (200) comprises ultrasonicating the bath (200) or bubbling the bath (200).

14. The method (500) according to any one of the preceding claims, wherein curing the second layer (116) comprises curing the second layer (116) with the same thickness as the first layer (116) after agitating the bath (200).
